# EUROPEAN PATENT SPECIFICATION

(11) **EP 3 027 094 B1**
(45) Date of publication and mention of the grant of the patent: **06.09.2017**
(21) Application number: 14777202.4
(22) Date of filing: 23.07.2014
(51) Int. Cl.: A47J 31/44, A47J 31/057

(54) **A HOT BEVERAGE PREPARATION MACHINE**
MASCHINE ZUR ZUBEREITUNG HEISSER GETRÄNKE
MACHINE DE PRÉPARATION DE BOISSONS CHAUDES

(30) Priority: 02.08.2013 TR 201309440
(43) Date of publication of application: 08.06.2016
(73) Proprietor: Arçelik Anonim Sirketi, 34950 Istanbul (TR)
(72) Inventor: GUNDUZ, Nihat, 34950 Istanbul (TR); GERZELI, Ismail, 34950 Istanbul (TR); HASANREISOGLU, Ali Levent, 34950 Istanbul (TR)
(86) International application number: PCT/TR2014/000257
(87) International publication number: WO 2015/016793

(56) References cited:
- EP-A1- 1 987 748
- DE-A1- 2 625 650
- DE-A1- 19 857 165
- DE-U- 7 203 807
- DE-U1- 7 725 711
- DE-U1- 7 838 692

## Description

The present invention relates to a hot beverage preparation machine comprising a water container and a brewing chamber into which water is transferred from the water container.
In hot beverage preparation machines, the water filled into the water container is heated by a water heater and is transferred to the brewing chamber containing raw material of the beverage to be prepared. The brewing process is performed in the brewing chamber as a result of the interaction between the raw beverage material and water. Afterwards, the brewed beverage is transferred into a pot and served. In the state of the art hot beverage preparation machines explained in the International Patent Application No WO2004008922, DE-U- 7 203 807 and the German Patent Application No. DE19857165, the brewing chamber and the pot are positioned one above the other and the water container is situated side by side with the brewing chamber and the pot.
The aim of the present invention is the realization of a hot beverage preparation machine that provides ease of production and utilization.
In the hot beverage preparation machine realized in order to attain the aim of the present invention and explicated in the claims, at one side of the body, the brewing chamber is disposed above the pot and the water container is disposed on a platform at the other side of the body. When the brewing chamber and the water container are placed onto the platform, the strainer orifice in the brewing chamber and the water container orifice are positioned one above the other and face each other.
In an embodiment of the present invention, the strainer has an inclined base that enables the water to flow thereover without splattering and that enables the distance between the base and itself to decrease as getting closer to the inside of the strainer. The water poured from the water container orifice to the strainer orifice is transferred into the strainer by trickling over the inclined base.

In an embodiment of the present invention, the water container orifice and the strainer orifice have bases inclined in the same direction.

In an embodiment of the present invention, the hot beverage preparation machine comprises a brewing chamber orifice that extends outwards from over the brewing chamber and that closes around the strainer except for the top side of the strainer orifice when the strainer is placed into the brewing chamber. The strainer orifice that contacts the hot water gets hot and the brewing chamber orifice prevents the user from directly touching the strainer orifice.

In an embodiment of the present invention, the strainer orifice is integrated with the strainer.

In an embodiment of the present invention, the hot beverage preparation machine comprises a lid that closes the top side of the brewing chamber so that the strainer orifice is open. Thus, vapor forming in the brewing chamber exits through the strainer orifice in a controlled manner.

In another embodiment of the present invention, the hot beverage preparation machine comprises a wall that has gaps enabling the water flowing over the strainer orifice to be delivered into the strainer. By means of the wall, the flow speed of the water is decreased and the water is enabled to be delivered into the strainer by trickling through the gaps.

By means of the present invention, a hot beverage preparation machine is realized, having a strainer orifice that enables an easy water transfer from the water container to the brewing chamber and that allows the vapor in the brewing chamber and the vapor in the water container to be discharged in a controlled manner.

The hot beverage preparation machine realized in order to attain the aim of the present invention is illustrated in the attached figures, where:

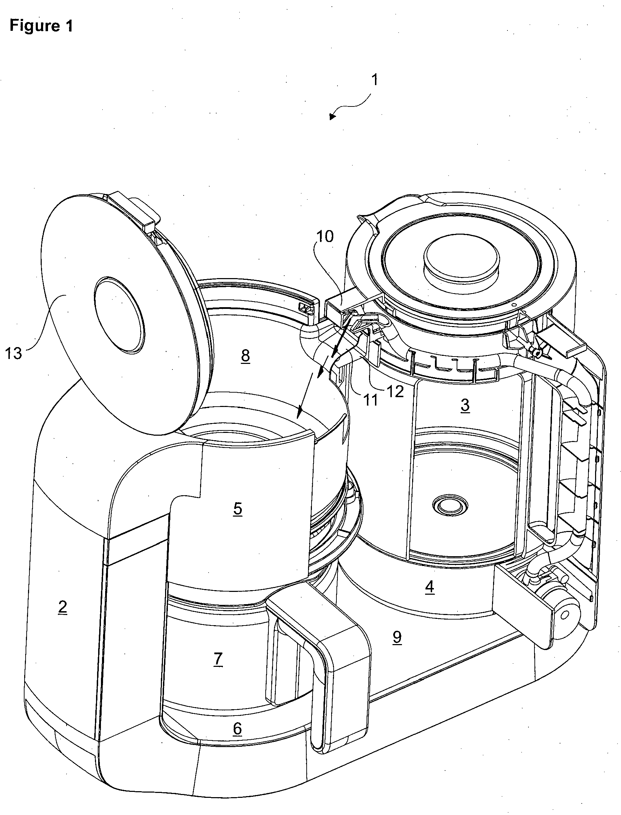

Figure 1 - is the perspective view of a hot beverage preparation machine.

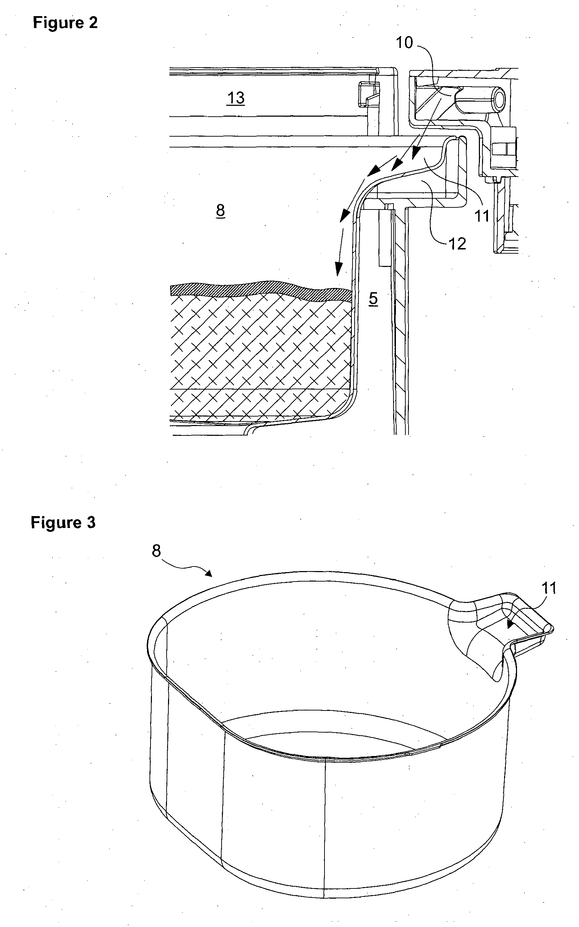

Figure 2 - is the partial cross-sectional view of a hot beverage preparation machine.
Figure 3 - is the perspective view of the strainer in an embodiment of the present invention.
Figure 4 - is the perspective view of the strainer in another embodiment of the present invention.
Figure 5 - is the perspective view of the lid while closing over the strainer in an embodiment of the present invention.

The elements illustrated in the figures are numbered as follows:
1. Hot beverage preparation machine
2. Body
3. Water container
4. Water heater
5. Brewing chamber
6. Housing
7. Pot
8. Strainer
9. Platform
10. Water container orifice
11. Strainer orifice
12. Brewing chamber orifice
13. Lid
14. Wall

The hot beverage preparation machine (1) comprises:
- a body (2),
- a water container (3) wherein water is filled,
- a water heater (4) that enables the water in the water container (3) to be heated,
- a brewing chamber (5) wherein the raw material of the beverage to be prepared is put and whereto the water heated in the water container (3) is transferred, wherein the brewing process is performed as a result of the interaction between the raw beverage material and water,
- a housing (6) that is situated on the body (2), under the brewing chamber (5),
- a pot (7) that is suitable to be placed into the housing (6), the top surface thereof being at least partially open, whereto the beverage brewed in the brewing chamber (5) is transferred,
- a strainer (8) that is placed into the brewing chamber (5), wherein the raw beverage material is put and that enables the beverage to be transferred to the pot (7) by retaining the raw beverage material particles.
- a platform (9) that is positioned to be next to the brewing chamber (5) and the pot (7), positioned one over the other on the body (2) and whereon the water container (3) is placed, enabling the water container (3) to be kept next to the brewing chamber (5) and the pot (7),

The hot beverage preparation machine (1) of the present invention comprises:
- a water container orifice (10) that is arranged on the water container (3) and that enables the water heated in the water container (3) to be transferred into the strainer (8) while the water container (3) is on the platform (9), and
- a strainer orifice (11) that is arranged on the strainer (8), that extends outwards from over the strainer (8), that faces the water container orifice (10) when the brewing chamber (5) is on the body (2) and that enables the water received from the water container (3) to be transferred into the strainer (8)
(Figure 1, Figure 2, Figure 3).

In the hot beverage preparation machine (1) of the present invention, when hot beverage is desired to be prepared, water is filled into the water container (3) and placed on the platform (9) to be seated on the connector. The water in the water container (3) is enabled to be heated by operating the water heater (4). The heated water is transferred to the water container orifice (10) by means of the transfer mechanism. The water poured from the water container orifice (10) to the strainer orifice (11) is accumulated in the strainer (8) by trickling over the strainer orifice (11). Thus, by means of a simple structure, water is transferred from the water container (3) into the brewing chamber (5). The brew and the water are mixed in the brewing chamber (5), and after the brewing process is completed, the beverage is made ready to be served by being transferred into the pot (7) under the brewing chamber (5). When the beverage is to be served, the pot (7) is taken from inside the housing (6) and taken to the place of serving. In the case the beverage is desired to be served by diluting, it is possible to take the pot (7) together with the water container (3) from the platform (9) and carry to the place of serving.

In an embodiment of the present invention, the strainer orifice (11) has an inclined base that descends from the strainer (8) wall into the strainer (8), enabling the water to flow by trickling. By means of the inclined base of the strainer orifice (11), the water is transferred into the strainer (8) without splattering.

In an embodiment of the present invention, the water container orifice (10) and the strainer orifice (11) base have an inclination in the same direction. The water poured from the water container orifice (10) to the strainer orifice (11) in an almost inclined manner does not splatter upon contacting the strainer orifice (11) that has an inclination in the same direction.

In an embodiment of the present invention, the hot beverage preparation machine (1) comprises a brewing chamber orifice (12) with its top open, that extends outwards from over the brewing chamber (5), wherein the strainer orifice (11) remains when the strainer (8) is placed into the brewing chamber (5) and that surrounds the strainer orifice (11). The strainer orifice (11) that contacts the hot water gets hot and the brewing chamber orifice (12) prevents the user from directly touching the strainer orifice (11).

In an embodiment of the present invention, the strainer orifice (11) is produced as a single piece with the strainer (8).

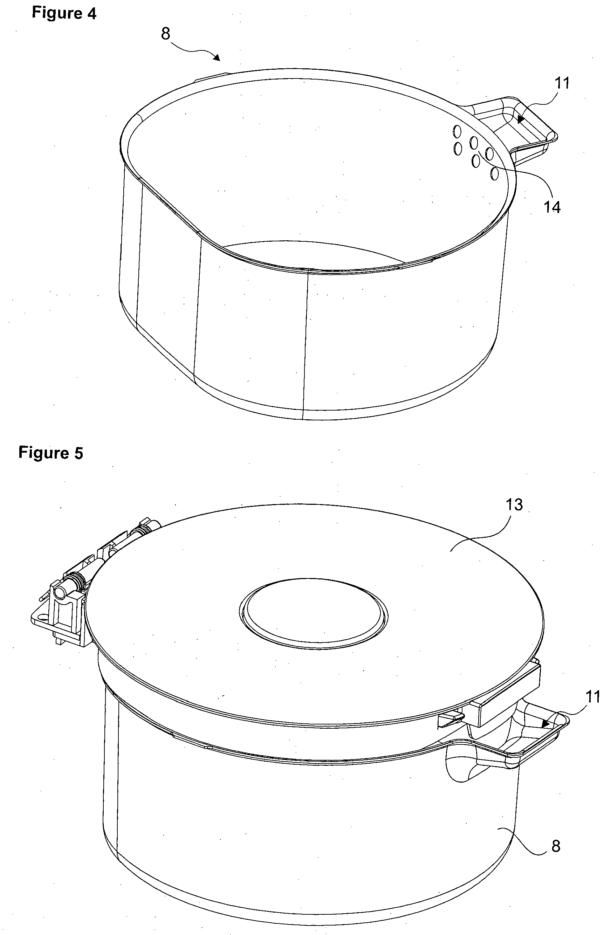

In an embodiment of the present invention, the hot beverage preparation machine (1) comprises a lid (13) that closes the top side of the brewing chamber (5) so that the strainer orifice (11) is open. Thus, vapor forming in the brewing chamber (5) exits through the strainer orifice (11) in a controlled manner (Figure 5).

In another embodiment of the present invention, the hot beverage preparation machine (1) comprises a wall (14) that has holes enabling the water flowing over the strainer orifice (11) to be delivered into the strainer (8). By means of the wall (14), the flow speed of the water is decreased and the water is enabled to be delivered into the strainer (8) by trickling through the gaps. Thus, the water pouring into the beverage brewed in the strainer (8) by trickling without splattering improves the quality of the brew (Figure 4).

By means of the present invention, a hot beverage preparation machine (1) is realized, having a strainer orifice (11) that enables the water poured from the water container orifice (10) arranged on the water container (3) to the brewing chamber (5) without spoiling texture of the beverage brewed in the brewing chamber (5) and wherein the vapor in the brewing chamber (5) and the water container (3) is discharged in a controlled manner through between the strainer orifice (11) and the water container orifice (10).

## Claims

1. A hot beverage preparation machine (1) comprising
- a body (2),
- a water container (3) wherein water is filled,
- a water heater (4) that enables the water in the water container (3) to be heated,
- a brewing chamber (5) wherein the raw material of the beverage to be prepared is put and whereto the water heated in the water container (3) is transferred, wherein the brewing process is performed as a result of the interaction between the raw beverage material and water,
- a housing (6) that is situated on the body (2), under the brewing chamber (5),
- a pot (7) that is suitable to be placed into the housing (6), the top surface thereof being at least partially open, whereto the beverage brewed in the brewing chamber (5) is transferred,
- a strainer (8) that is placed into the brewing chamber (5), wherein the raw beverage material is put and that enables the beverage to be transferred to the pot (7) by retaining the raw beverage material particles.
- a platform (9) that is positioned to be next to the brewing chamber (5) and the pot (7), positioned one over the other on the body (2) and whereon the water container (3) is placed, enabling the water container (3) to be kept next to the brewing chamber (5) and the pot (7),
- a water container orifice (10) that is arranged on the water container (3) and that enables the water heated in the water container (3) to be transferred into the strainer (8) while the water container (3) is on the platform (9), and **characterized by**
- a strainer orifice (11) that is arranged on the strainer (8), that extends outwards from over the strainer (8), that faces the water container orifice (10) when the brewing chamber (5) is on the body (2) and that enables the water received from the water container (3) to be transferred into the strainer (8).

2. A hot beverage preparation machine (1) as in Claim 1, **characterized by** the strainer orifice (11) that has an inclined base, that descends from the strainer (8) wall into the strainer (8) and that enables the water to flow thereover by trickling.

3. A hot beverage preparation machine (1) as in Claim 1 or 2, **characterized by** the water container orifice (10) that has an inclination almost in the same direction as the strainer orifice (11) base.

4. A hot beverage preparation machine (1) as in any one of the above claims, **characterized by** a brewing chamber orifice (12) with its top open, that is arranged on the brewing chamber (5), that extends outwards from over the brewing chamber (5), wherein the strainer orifice (11) remains when the strainer (8) is placed into the brewing chamber (5) and that surrounds the strainer orifice (11).

5. A hot beverage preparation machine (1) as in any one of the above claims, **characterized by** the strainer orifice (11) that is produced as a single piece with the strainer (8).

6. A hot beverage preparation machine (1) as in any one of the above claims, **characterized by** a lid (13) that closes the top side of the brewing chamber (5) so that the strainer orifice (11) is open.

7. A hot beverage preparation machine (1) as in any one of the above claims, **characterized by** a wall (14) that is situated on the strainer (8) and that has holes enabling the water flowing over the strainer orifice (11) to be delivered into the strainer (8).

## Patentansprüche

1. Eine Vorbereitungsmaschine für Heißgetränke (1) bestehend aus
- einem Körper (2),
- einem Wasserbehälter (3), wobei Wasser gefüllt wird,
- einem Wasserheizer (4), der ermöglicht, das Wasser im Wasserbehälter (3) zu erwärmen,
- einer Südkammer (5), wobei das zu vorbereitende Rohmaterial der Getränke hingelegt und das im Wasserbehälter (3) erwärmte Wasser übertragen wird, wo die Südverarbeitung durchgeführt wird als ein Ergebnis der Wechselwirkung zwischen Rohgetränkematerial und Wasser,
- einem Gehäuse (6), das auf den Körper (2) hingestellt wird, unter die Südkammer (5),
- einem Topf (7), der geeignet ist, um ins Gehäuse (6) hingelegt zu werden, dessen Oberfläche mindestens teilweise öffnen, wohin die in der Südkammer (5) gebraute Getränke übertragen werden,
- einem Sieb (8), das in die Südkammer (5) hingelegt wird, wobei das Rohgetränkematerial eingelegt wird und ermöglicht, daß die Getränke durch Zurückhaltung der Rohgetränkematerialpartikeln zum Topf (7) übertragen werden,
- einer Plattform (9), die neben Südkammer (5) und Topf (7) versetzt wird, die aufeinander auf den Körper (2) versetzt sind und worauf der Wasserbehälter (3) hingesetzt wird, sodaß ermöglicht ist, den Wasser-behälter (3) neben der Südkammer (5) und dem Topf (7) beizubehalten,
- einer Wasserbehälteröffnung (10), die auf den Wasserbehälter (3) einge-stellt ist und ermöglicht, das im Wasserbehälter (3) erwärmte Wasser in den Sieb (8) zu übertragen, als der Wasserbehälter (3) auf der Plattform (9) ist, und **dadurch gekennzeichnet, daß**
- eine Sieböffnung (11), die auf das Sieb (8) hingestellt ist, sich über das Sieb (8) nach draußen erweitert, der Wasserbehälteröffnung (10) gegenübersteht, als die Südkammer (5) auf dem Körper (2) ist und ermöglicht, das vom Wasserbehälter (3) erhaltene Wasser in das Sieb (8) zu übertragen.

2. Eine Vorbereitungsmaschine für Heißgetränke (1) nach Anspruch 1, **dadurch gekennzeichnet, daß** eine Sieböffnung (11), die einen geneigten Grund hat, der von der Sieb- (8) wand in das Sieb (8) herunterkommt und ermöglicht, daß das Wasser darauf tropfend fließen kann.

3. Eine Vorbereitungsmaschine für Heißgetränke (1) nach Anspruch 1 oder 2, **dadurch gekennzeichnet, daß** eine Wasserbehälteröffnung (10), die eine Neigung nahezu in derselben Richtung wie Sieböffnung- (11) boden hat.

4. Eine Vorbereitungsmaschine für Heißgetränke (1) nach den vorhergehenden Ansprüchen, **dadurch gekennzeichnet, daß** eine Südkammeröffnung (12) mit ihrem offenen Kopf, der auf die Südkammer (5) hingestellt ist, sich über die Südkammer (5) nach draußen erweitert, worin die Sieböffnung (11) zurück-bleibt, wenn das Sieb (8) in die Südkammer (5) hingelegt wird und die Sieböffnung (11) umgibt.

5. Eine Vorbereitungsmaschine für Heißgetränke (1) nach den vorhergehenden Ansprüchen, **dadurch gekennzeichnet, daß** die Sieböffnung (11), die als ein Einzelstück zusammen mit dem Sieb (8) produziert ist.

6. Eine Vorbereitungsmaschine für Heißgetränke (1) nach den vorhergehenden Ansprüchen, **dadurch gekennzeichnet, daß** ein Deckel (13), der die Oberseite der Südkammer (5) einschließt, sodaß die Sieböffnung (11) offen ist.

7. Eine Vorbereitungsmaschine für Heißgetränke (1) nach den vorhergehenden Ansprüchen, **dadurch gekennzeichnet, daß** eine Wand (14), die auf das Sieb (8) hingestellt ist und Löcher hat, die ermöglichen, daß das Wasser die Sieböffnung (11) für Weitergabe in das Sieb (8) überfließt.

## Revendications

1. Une machine de préparation de boissons chaudes (1) comprenant
- un corps (2)
- un conteneur d'eau (3) dans lequel l'eau est remplie,
- un chauffe-eau (4) qui permet de chauffer l'eau dans le réservoir d'eau (3)
- une chambre d'ébullition (5) dans laquelle la matière première de la boisson à préparer est placée et à la quelle l'eau chauffée dans le récipient d'eau (3) est transférée, dans lequel le processus d'ébullition est réalisé à la suite de l'interaction entre la matière première de la boisson et eau,
- un boîtier (6) situé sur le corps (2), sous la chambre d'ébullition (5),
- un pot (7) qui est apte à être placé dans le boîtier (6), dont la surface supérieure est au moins partiellement ouverte, dans laquelle la boisson infusée dans la chambre d'ébullition (5) est transférée,
- un filtre (8) qui est placé dans la chambre d'ébullition (5), dans lequel la matière première de la boisson est mise et qui permet de transférer la boisson vers le pot (7) en conservant les particules de la matière première de la boisson.
- une plate-forme (9) qui est positionnée à côté de la chambre d'ébullition (5) et le pot (7), positionnés l'un par rapport à l'autre sur le corps (2) et sur lequel est placé le conteneur d'eau (3), permettant au conteneur d'eau (3) d'être maintenu à côté de la chambre d'ébullition (5) et le pot (7),
- un orifice de récipient d'eau (10) qui est disposé sur le conteneur d'eau (3) et qui permet de transférer l'eau chauffée dans le réservoir d'eau (3) dans le filtre (8) pendant que le conteneur (3) est sur la plate-forme (9), et **caractérisée par**
- un orifice de filtre (11) qui est disposé sur le filtre (8), qui s'étend vers l'extérieur du filtre (8), qui fait face à l'orifice du conteneur d'eau (10) lorsque la chambre d'ébullition (5) est sur le corps (2) et qui permet de transférer l'eau reçue du conteneur d'eau (3) dans le filtre (8).

2. Une machine de préparation de boissons chaudes (1) selon la revendication 1, **caractérisée en ce que** l'orifice du filtre (11) qui présente une base inclinée qui descend de la paroi du filtre (8) dans le filtre (8) et qui permet à l'eau de s'écouler par goutte à goutte.

3. Une machine de préparation de boissons chaudes (1) selon la revendication 1 ou 2, **caractérisée par** l'orifice de récipient d'eau (10) qui présente une inclinaison presque dans la même direction que la base de l'orifice de filtre (11).

4. Une machine de préparation de boissons chaudes (1) selon l'une quelconque des revendications précédentes, **caractérisée par** un orifice de chambre d'ébullition (12) avec son dessus ouvert, qui est agencé sur la chambre d'ébullition (5), qui s'étend vers l'extérieur depuis la chambre d'ébullition (5), dans lequel l'orifice du filtre (11) reste lorsque le filtre (8) est placée dans la chambre d'ébullition (5) et entoure l'orifice du filtre (11).

5. Une machine de préparation de boissons chaudes (1) selon l'une quelconque des revendications précédentes, **caractérisée par** l'orifice de filtre (11) qui est réalisé en une seule pièce avec le filtre (8).

6. Une machine de préparation de boissons chaudes (1) selon l'une quelconque des revendications précédentes, **caractérisée par** un couvercle (13) qui ferme le côté supérieur de la chambre d'ébullition (5) de sorte que l'orifice de filtre (11) est ouvert.

7. Une machine de préparation de boissons chaudes (1) selon l'une quelconque des revendications précédentes, **caractérisée par** une paroi (14) qui est située sur le filtre (8) et qui comporte des trous permettant d'évacuer l'eau qui s'écoule sur l'orifice du filtre (11) à être livré dans le filtre (8).
